# EUROPEAN PATENT APPLICATION

(11) **EP 0 617 373 A2**
(43) Date of publication of application: **28.09.1994**
(21) Application number: 94103265.8
(22) Date of filing: 04.03.1994
(51) Int. Cl.: G06F 15/40

(54) **A method and system for parallel, system managed storage for objects on multiple servers**

(30) Priority: 24.03.1993 US 36305
(71) Applicant: International Business Machines Corporation, Armonk, N.Y. 10504 (US)
(72) Inventor: Burket, Thomas G., Potomac, MD 20854 (US); Daley, Michael E., Rockville, MD 20855 (US); Motter, Wesley J., Gaithersburg, MD 20882 (US); Tiwari, Manoj K., Germantown, MD 20874 (US)
(74) Representative: Schäfer, Wolfgang, Dipl.-Ing.

(57) **Abstract**

A distributed storage system is disclosed in which an originating storage location establishes the criteria for storage management for a file. When the file is transmitted to other, subsidiary storage locations, it is accompanied by information controlling the storage of the file. For example, the duration of storage will be controlled by the control information. When a master file is deleted from an archive, in accordance with the criteria established at the time of storage, copies of the file at subsidiary locations can either be rendered inaccessible or alternately the storage management for that file can be changed. A feature is the distribution of storage management control information along with the file to diverse storage locations in a complex data processing system.

## Description

### Background of the Invention

### 1. Technical Field

The invention disclosed broadly relates to data processing systems and more particularly relates to the management of storage in a data processing system.

### 2. Related Patents

The following patents are related to the invention disclosed herein and are incorporated herein by reference:
USP 5,093,911 by C. A. Parks, et al. entitled "Storage and Retrieval System," assigned to the IBM Corporation and incorporated herein by reference.

USP 5,161,214 by M. R. Addink, et al. entitled "Method and Apparatus for Document Image Management in a Case Processing System," assigned to the IBM Corporation and incorporated herein by reference.

### 3. Background Art

Systems Managed Storage (SMS) is the management of data objects in a storage hierarchy within a single system. Objects move through DASD, optical shelf libraries, tape, and so on within the confines of the single system. In an environment with distributed servers, a single SMS process for objects is insufficient. The problem is as follows:
Objects captured and stored at one server location may require movement to another server for permanent archival storage or for temporary use at that server.

When an object moves to another server for archival purposes, it may need to assume different management characteristics.

When an object is copied to another server for temporary use, it may need to assume different management characteristics.

When an object has been moved to another server for archival purposes and a copy has been left behind in the original server, the copy may need to assume different management characteristics.

Current SMS solutions do not cover these problems because of their limitation to single servers.

### Objects of the Invention

It is therefore an object of the invention to provide an improved method for managing storage in a data processing system.

It is still another object of the invention to provide an improved method for parallel, system managed storage for objects on multiple servers in a data processing system.

### Summary of the Invention

These and other objects, features and advantages are accomplished by the invention disclosed herein. A distributed storage system is disclosed in which an originating storage location establishes the criteria for storage management for a file. When the file is transmitted to other, subsidiary storage locations, it is accompanied by information controlling the storage of the file. For example, the duration of storage will be controlled by the control information. When a master file is deleted from an archive, in accordance with the criteria established at the time of storage, copies of the file at subsidiary locations can either be rendered inaccessible or alternately the storage management for that file can be changed. A feature is the distribution of storage management control information along with the file to diverse storage locations in a complex data processing system.

In accordance with the invention, an image object distribution manager processor includes a memory having a management class table in which is stored a user-defined policy for managing the storage of objects at diverse storage locations in a network. The management class table can specify document types and storage classes and for each document type and storage class, the table can provide for the user-defined period for retention of the document in both its master copy form and its derivative copy form. The table can also provide for the period of existence of the master file in the system before it is automatically archived in an archive server in the network.

Further in accordance with the invention, when an object file is transferred from one storage location to another storage location in the network, a data set of storage management attributes is transferred to the destination storage location. The destination storage attributes are defined either by the management class table in the image object distribution manager's processor, or alternately by local storage policy values for some of those attributes, which can be defined by the user for each respective storage device in the network.

In this manner, the overall system policy for the management of object storage in the network can be implemented throughout the system, and yet the user can define local customized options for that management policy to be applied at local storage devices in the network.

### Brief Description of the Drawings

These and other objects, features and advantages of the invention will be more fully appreciated with reference to the accompanying figures.
- Fig. 1A: is an architectural block diagram of a first example data processing system within which the invention finds application.
- Fig. 1B: is an architectural block diagram of a second example data processing system within which the invention finds application.
- Fig. 1C: is a more detailed block diagram of the image object distribution manager (IODM) processor 100.
- Fig. 1D: is a more detailed block diagram of the archive server processor 106.
- Fig. 1E: is a more detailed block diagram of the input workstation processor 108.
- Fig. 1F: is a more detailed block diagram of the user workstation processor 112.
- Fig. 1G: is a more detailed block diagram of the user workstation processor 114.
- Fig. 2: is a flow diagram of the sequence of operational steps depicting the migration between an original site and archival site.
- Fig. 3: is a flow diagram of a sequence of operational steps which depicts the migration of file control in a more detailed manner.
- Fig. 4: is a flow diagram of a sequence of operational steps depicting the process for the receipt of file control information by a target server.
- Fig. 5: is a flow diagram of a sequence of operational steps for the retrieval by a local server from a remote server, of file control information.
- Fig. 6A: illustrates an example application of the invention, for the date of 3 March 1993, inputting the Jones document.
- Fig. 6B: continues the example of Fig. 6A, for the date of 4 March 1993, sending the master file to the user workstation 112 and keeping a copy at the input workstation 108.
- Fig. 6C: continues the illustration of Fig. 6B for the date of 6 March 1993, archiving the master file at the archive 106, keeping a copy of the file at the user workstation 112, and deleting a copy of the file at the input workstation 108.
- Fig. 6D: continues the illustration of Fig. 6C, for the date of 7 March 1993, sending a copy of the file to the user workstation 114.
- Fig. 6E: modifies the example of Fig. 6B by returning to the date of 5 March 1993, and sending the master file to the user workstation 114 and keeping a copy at the user workstation 112.
- Fig. 6F: continues the example of Fig. 6E at a later time on the date of 5 March 1993, archiving the master file to the archive 106 and keeping a copy at the user workstation 114. Discussion of the Preferred Embodiment

In accordance with the invention, when an object is captured into a local server, it is assigned attributes that define its Systems Managed Storage (SMS) characteristics and policies, such as how long to stay at certain points in the storage hierarchy. Examples: how long to reside on DASD before migration to optical storage, how long to reside on optical before migration to tape, and so on. The invention extends the characteristics and policies as follows:
* Define a new policy that controls how long the new object resides locally before being sent to an archival site.
* The new policy includes rules that allow the object to be given SMS attributes for its archival site by the original capture site or by the archival site, or both, with the actions of the archival site taking precedence. The archival site then manages the object in parallel with the management of the original site.
* The new policy includes rules that allow the object to be deleted when it has been archived at another site.
* The new policy includes rules that allow the object to be given new SMS attributes at the local site after it has been archived at another site. This allows an object to be managed differently after it has made a transition from being the original master copy of an object to being a copy of the now-archived original.
* When an object is deleted at the archival site, either by manual action or as a consequence of the management policies (e.g., automatic expiration), copies of the object stored at other sites may no longer be referenced.
* The archival process may occur at any time during the lifetime of the local object (the lifetime runs from object capture to expiration). The archival process may occur at any point in the storage hierarchy.
* When a remote site requests a copy of an object stored locally, the remote site receives the SMS attributes of the object as well as the object itself, and the remote site may retain those attributes or assign its own attributes and policies independent of the original.
* Object copies and object originals may have identical or different storage management policies, depending on the local rules. For example, copies may have a limited lifetime or copies might be limited to higher-speed storage media intended for temporary, quick access. Copies may also be placed on permanent archival media as desired within the policies.
* The execution of the policies, once established, is automatic and does not require explicit manual action.

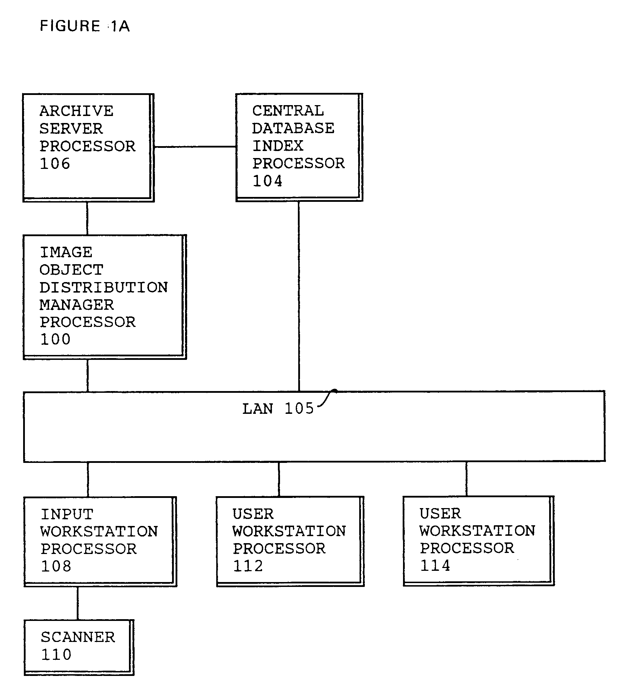

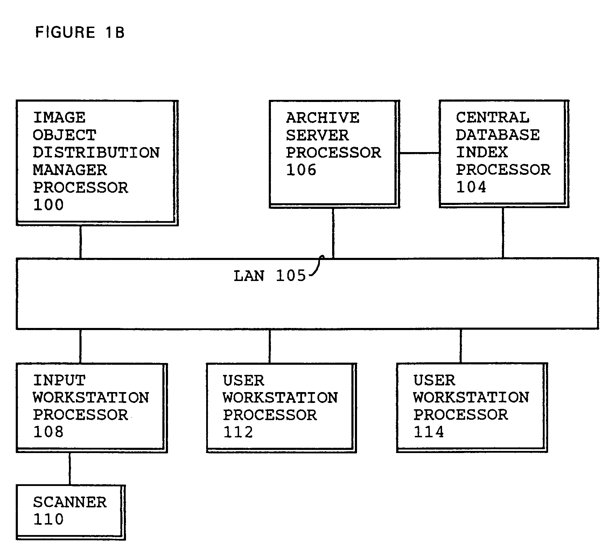

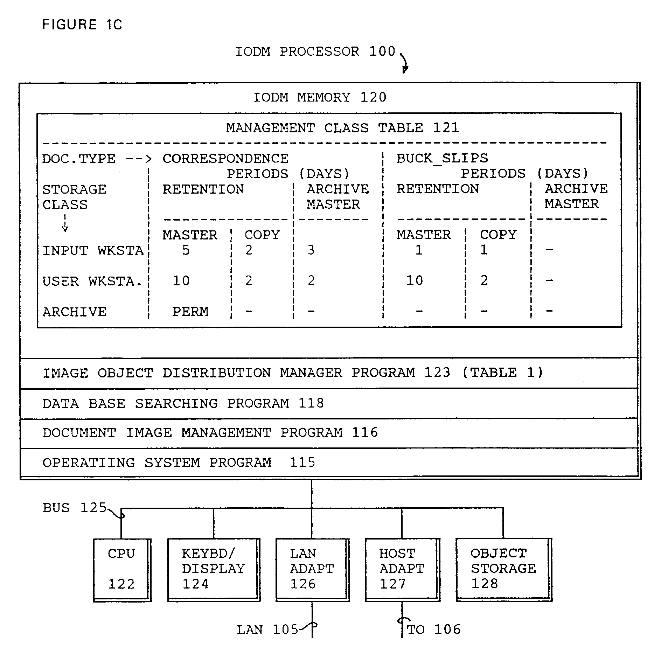

The architectural diagrams of Fig. 1A and Fig. 1B, provide examples of network of storage devices, with an input site, an archive site and one or more user sites, in a distributed data processing system.

Token ring local area network 105 is an example of a system of servers which can input, store, transfer and display document image objects. Each server can include a workstation processor with a hard disk drive storage, such as an IBM PS/2 Mod 80, for example. Input workstation server 108 is connected to LAN 105, and has a document scanner 110 as the input device. Workstation server 112 is connected to LAN 105. Workstation server 114 is connected to LAN 105. The archive server 106 is connected to LAN 105 in Fig. 1B, and has an optical mass storage device for archiving document images. A central data base server 104 is connected to LAN 105, for providing an index to all documents stored in the system. The image object distribution manager (IODM) server 100 connected to the LAN 105, stores a master set of control tables which define the storage policy for the various types of documents stored in the system and the various classes of storage in the system. The archive server 106 may be connected through the IODM server 100 to the LAN 105 in an alternate embodiment shown in Fig. 1A.

Figs. 1A and 1B show a first workstation 108 which includes a first storage which can receive a storage object, for example the image of a document which has been scanned into the system. In accordance with the invention, the storage object at workstation 108 can be stored in accordance with a storage management policy by means of storing control characters in association with the object, in the first workstation 108. For example, the duration of storage of the storage object may be encoded in the control characters which are stored in association with the storage of the object at workstation 108.

Figs. 1A and 1B also show a second workstation 112 which includes a second storage capable of storing objects such as image objects. In accordance with the invention, when an application or user desires to transfer a copy of the stored object at workstation 108 to the second storage device in the workstation 112, the storage management control characters stored in association with the stored object are transferred along with the stored object from the first workstation 108 to the second workstation 112. There, in workstation 112, both the copy of the object to be stored and the associated storage management characters are stored.

Further in accordance with the invention, a local clock can be associated with or contained in the first workstation 108, for the purpose of timing processes carried out at workstation 108. In accordance with the invention, the control characters associated with the object stored in the first in workstation 108, can specify a duration of storage for the object or alternately an instant in time for the initiation of further action at workstation 108 on the stored object. Such further action can include the deletion of the stored object, the transmission of the stored object to a second device, such as the workstation 112, or other storage management function.

Still further in accordance with the invention, a local clock can be associated or contained in the second workstation 112, to time processes carried out in the second workstation. In accordance with the invention, the control characters associated with the copy of the object stored in the second workstation 112, can specify the duration of storage for the copy of the object stored in workstation 112. Still further, the control characters can specify the instant in time at which other storage management functions can be performed on the copy of the object stored in workstation 112, through a monitoring of the local clock in the workstation 112 and a comparison of the local time with the timing information stored or contained in the control characters stored in association with the copy of the object in workstation 112.

Still further in accordance with the invention, a universal expiration instant can be specified in the control characters associated with the original copy of the object stored in workstation 108 and the derivative copy of the object stored in workstation 112. When the universal instant of time occurs, corresponding to a system-wide instant specified by a system-wide clock, the original copy of the object at workstation 108 and the derivative copy of the object in workstation 112 can be simultaneously or substantially simultaneously deleted from the respective storage devices in the two workstations.

Figs. 1A and 1B also show a central data base index 104 which stores an inverted file index that relates object files stored in the system, to their respective storage location addresses. In accordance with the invention, if the control characters associated with an object stored at a storage location in the system, such as the first storage device in the workstation 108, specifies the transfer of a copy of the object to another storage device or specifies the deletion of the object from a storage device such as the workstation 108, then a message is transmitted from the processor associated with the storage device, such as the workstation 108, to the central data base index 104, to update the inverted file index information to reflect the change in the location or the change in existence of the stored object file.

Figs. 1A and 1B also show an archive server 106 which is connected to LAN 105 and which may also be connected to the central data base index 104. In accordance with the invention, the derivative copy of the object stored at the second storage device in the second workstation 112 in association with its control characters for that stored object, can have its storage control specified by its control characters as follows. After a specified duration or at a specified instant in time, a copy of the derivative copy, that is a third copy of the object, can be transferred from the second workstation 112 to the archive server 106 for archive storage in the archive server 106.

Figs. 1A and 1B also show an additional user workstation 114 which can be coupled to the token ring LAN, for accessing copies of the derivative copy of the object stored in the workstation 112 in response to application or user requests.

Thus it is seen that storage management control can be distributed along with an object file to be stored, by associating with the object, file control information in the form of control characters which are transmitted in associated with the object file to diverse storage locations in a complex data processing system.

Fig. 1C illustrates the image object distribution manager (IODM) processor 100. Processor 100 includes the memory 120 connected by means of the bus 125 to the CPU 122, the keyboard and display 124, and the LAN adapter 126 which couples the processor 100 to the LAN 105. Also included is the host adapter 127 connecting the bus 125 to the archive server processor 106 in the embodiment shown in Fig. 1A. Also shown in Fig. 1C is the object storage 128 connected to the bus 125, which can be a combination of magnetic hard disk drives and/or optical storage in both the read only and the read/write or the write-once-read-many embodiments.

The memory 120 stores the management class table 121 which embodies the user-defined system managed storage policy for the data processing system of Fig. 1A or Fig. 1B. The management class table 121 is accessed by the document type and the storage class. Document types can be correspondence or they can be buckslips or other types of document images intended to be stored in storage devices located throughout the network of Fig. 1A or Fig. 1B. The management class table 121 provides for a document type of "correspondence" or "CORR" which provides, for example, with a retention period measured in days for both master copies and derivative copies of a document. The retention period can be customized for storage classes of input workstations which may be different from storage classes of user workstations which may be different from storage classes of archive servers in the network of Fig. 1A or Fig. 1B. The management class table 121 also provides for the period during which a master document may reside on input workstations and user workstations in the network prior to its being automatically archived in an archive server processor, for example the archive server processor 106 of Figs. 1A or 1B.

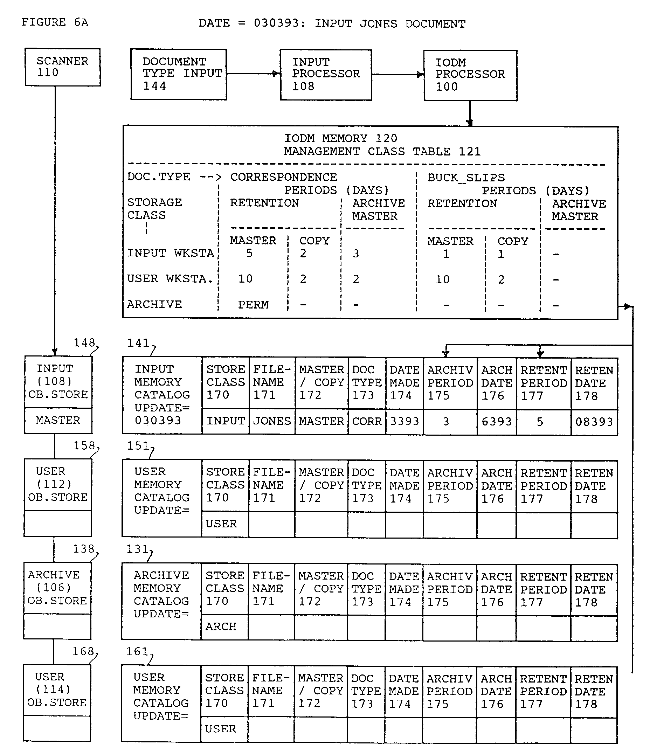

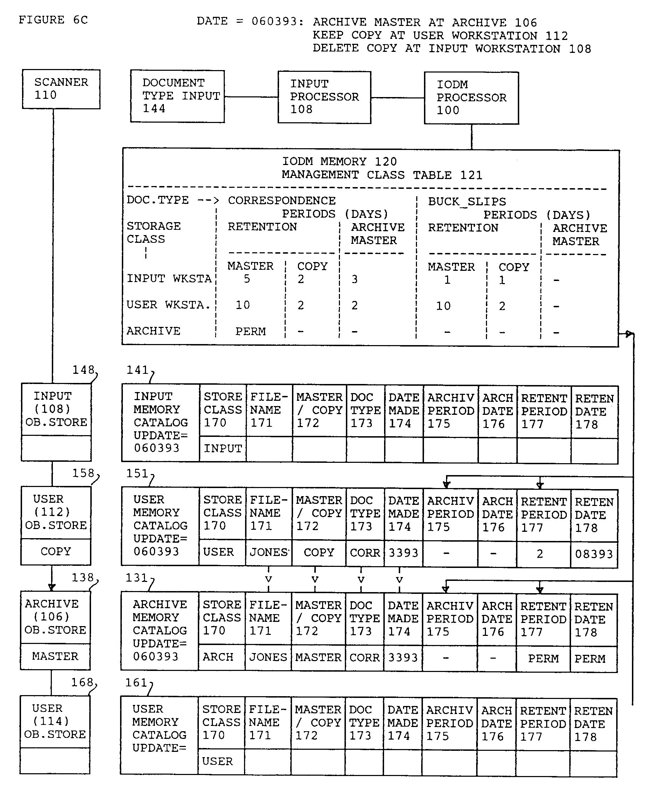

The memory 120 of Fig. 1C also includes the image object distribution management program 123 which is shown in greater detail in the pseudo code of Table 1. The programs stored in the memory 120 are sequences of executable instructions which are executed by the CPU 122. The memory 120 of Fig. 1C can also store a data base searching program 118 which will provide searching support for searching the management class table 121 when input query of document type, storage class, and master or copy status of a particular document is input to the processor 100. The memory 120 of Fig. 1C will also include a document image management program 116, such as has been described in the related patent applications by C. A. Parks, et al. and by M. R. Addink, et al., cited above. The memory 120 of Fig. 1C will also include an operating system program 115. A better understanding of the operation of the IODM processor 100 can be gained by referring to the example shown in Figs. 6A-6F, as described below.

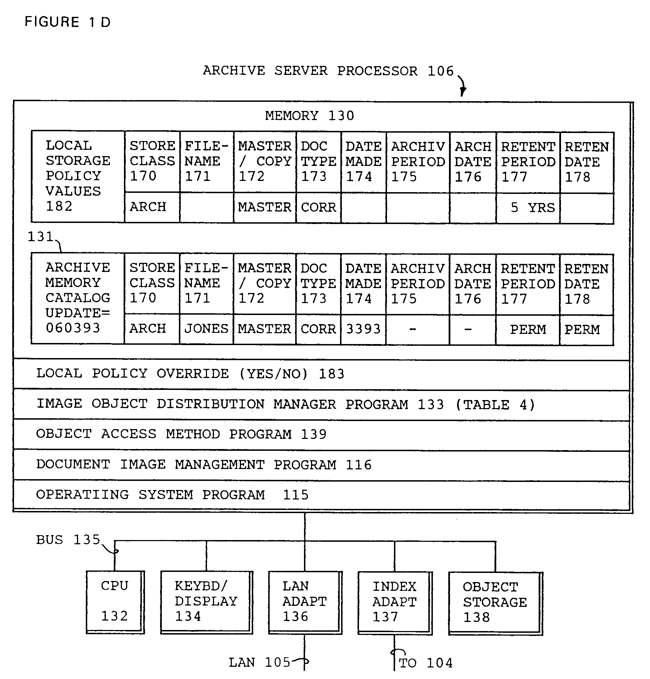

Fig. 1D is a detailed block diagram of the archive server processor 106. The processor 106 includes the memory 130 which is connected by means of the bus 135 to the CPU 132, the keyboard and display 134, and the LAN adapter 136 which connects to the LAN 105. Also included is the index adapter 137 which connects to the central data base index processor 104. Also included is the object storage 138, which can be combinations of magnetic hard disk drives and/or optical storage devices of the read only, read/write or write-once-read many types.

The memory 130 includes the local storage policy value attributes 182 which provide user-defined local options for a storage policy to be applied to the archive server processor 106. The memory 130 also includes the archive memory catalog 131 which provides a partition for the storage of control attributes which are supplied by the IODM processor 100 and specifically from the management class table 121 therein, to implement a system-wide storage management policy.

The memory 130 also includes a local policy override partition 183, which the user or system administrator can use to indicate whether the local storage policy values 182 or the system-wide storage policy stored in the archive memory catalog 131 is to be applied in storing a particular file or class of files. Also included in the memory 130 of Fig. 1D is the image object distribution manager program 133 shown in the pseudo code of Table 4. The programs stored in the memory 130 are sequences of executable instructions which are executed by the CPU 132.

Also included in the archive server processor 106 is the object access method program 139 which facilitates the accessing of objects stored in the object storage 138. Also included in memory 130 is the document image management program 116 and the operating system program 115. A better understanding of the operation of the archive server processor 106 can be had by reference to the example shown in Figs. 6A-6F, which will be discussed below.

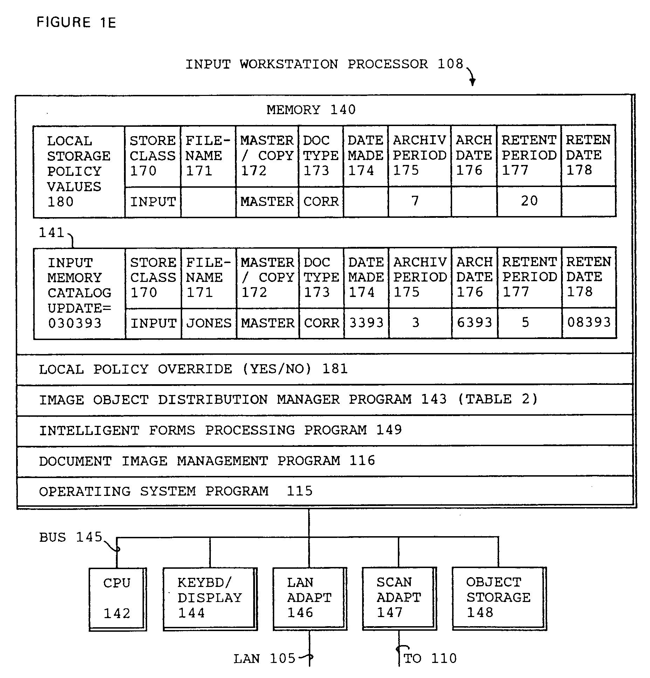

Fig. 1E is a detailed block diagram of the input workstation processor 108. Processor 108 includes the memory 140 which is connected by means of the bus 145 to the CPU 142, the keyboard and display 144, and the LAN adapter 146 which connects to the LAN 105. Also included is the scanner adapter 147 which connects to the scanner 110 and the object storage 148. The object storage 148 can be a combination of magnetic hard drives and optical storage devices of the read only, read/write or write-once-read-many type.

Also included in the input workstation processor 108 is the local storage policy attribute values 180 in the memory 140, which stores user-defined values for some of the control attributes for storing particular classes of files in the processor 108. Also included in the memory 140 is the input memory catalog 141 which is a partition for storing the storage control attributes received from the IODM processor 100 and in particular from the management class table 121 therein, to implement a system-wide storage policy.

The memory 140 also includes a local policy override partition 181, which stores a user provided yes or no value to indicate whether the local storage policy attribute values 180 are to override the system-wide storage policy values provided in the input memory catalog 141. The memory 140 also includes the image object distribution manager program 143 which is shown in pseudo code in Table 2. The programs in the memory 140 are sequences of executable instructions which are executed by the CPU 142. Also included in the memory 140 is the intelligent forms processing program 149 which can be used to perform a character recognition of information on document images scanned in by the scanner 110, to provide the automatic generation of alphanumeric control strings which would substitute for the control strings input by the keyboard 144. Examples of such control information would be document type, file name or other information typically required when a new document is scanned into the system. The intelligent forms processing program 149 is described in greater detail in the copending patent application serial number 07/870,129 by T. S. Betts, et al. entitled "Data Processing System and Method for Sequentially Repairing Character Recognition Errors for Scanned Images of Document Forms," filed April 15, 1992, assigned to the IBM Corporation and incorporated herein by reference.

Also included in the memory 140 is the document image management program 116 and operating system program 115. A better understanding of the operation of the input workstation processor 108 can be had by referring to Figs. 6A-6F describing an example, which will be discussed below.

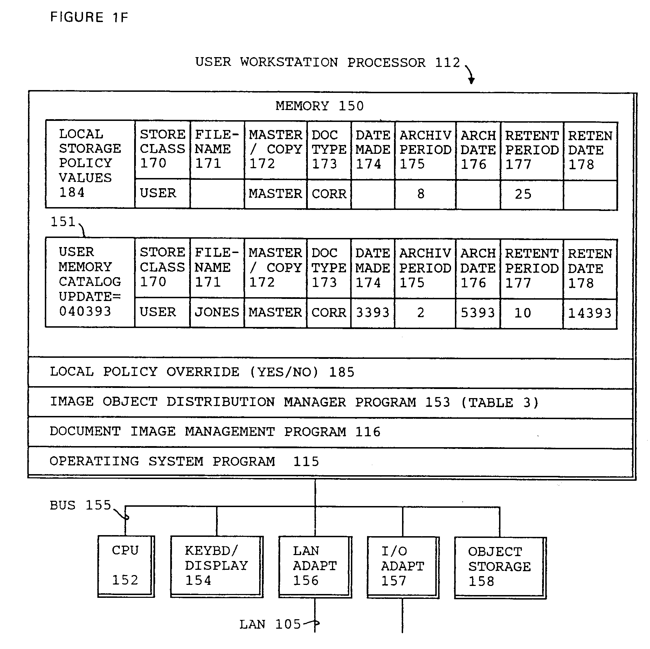

Fig. 1F illustrates the user workstation processor 112. Processor 112 includes the memory 150 which is connected by means of the bus 155 to the CPU 152, the keyboard and display 154 and the LAN adapter 156 which connects to the LAN 105. Also included is an I/O adapter 157 enabling the processor 112 to communicate with other networks. Also included is the object storage 158 which can be a magnetic hard drive storage combined with an optical storage of the read only, read/write or write-once-read-many type.

The memory 150 also includes the local storage policy attribute values 184 which are user-defined storage policy values for particular types of documents to be stored in the processor 112. The memory 150 also includes the user memory catalog 151 which is a partition for storing storage policy attributes received from the management class table 121 of the IODM processor 100. The memory 150 also includes the local policy override partition 185 which enables the user to decide whether to apply the local storage policy attribute values 184 or alternately the system-wide storage policy values in the user memory catalog 151.

The memory 150 also includes the image object distribution manager program 153 which is shown in greater detail of the pseudo code of Table 3. The programs stored in the memory 150 are sequences of executable instructions which are executed in the CPU 152. Also included in the memory 150 is the document image management program 116 and the operating system program 115. A better appreciation for the operation of the user workstation processor 112 can be had by reference to the example illustrated in Figs. 6A-6F, which will be discussed below.

Fig. 6G is a detailed block diagram of the user workstation processor 114. The user workstation processor 114 includes the memory 160 which is connected by means of the bus 165 to the CPU 162, the keyboard and display 164 and the LAN adapter 166 which is connected to the LAN 105. Also included is the I/O adapter 167 which allows the processor 114 to be connected to other networks. Also included is the object storage 168 which can be a magnetic hard drive storage combined with an optical storage of the read only, read/write, or write-once-read-many type.

The memory 160 also includes the local storage policy attribute values 186 which are attribute values defined by the user for specific application at the processor 114, to implement a local policy for specific types of documents stored at processor 114. Also included in the memory 160 is the user memory catalog 161 which is a partition for storing storage attribute values received from the IODM processor and in particular from the management class table 121 therein, which embody the system-wide storage management policy.

Also included in the memory 160 is the local policy override partition 187 which stores an indication provided by the user as to whether the local storage policy attribute values 186 or alternately the system-wide storage policy values in user memory catalog 161 are to be applied. Also included in the memory 160 is the image object distribution manager program 163 which is shown in pseudo code in Table 3. The programs stored in the memory 160 are sequences of executable instructions which are executed by the CPU 162. Also included in the memory 160 is the document image management program 116 and the operating system program 115. A better understanding of the operation of the user workstation processor 114 can be had by referring to the example illustrated in Figs. 6A-6F, which will be discussed below.

The memory catalog partitions shown for the input workstation 108, the user workstation 112, the archive server 106 and the user workstation 114, are all shown with a similar format. The input memory catalog 141, the user memory catalog 151, the archive catalog 131 and the user memory catalog 161 all include an update partition for storing the last date upon which that partition was written into. Each of these memory catalogs also includes a store class 170 which stores the storage class for that particular processor. Each memory catalog also includes a file name partition 171 which stores the file name for a corresponding file which is stored in the object storage for that processor. The memory catalog also includes a master/copy partition 172, which stores the status of the file as being either a master copy or a derivative copy which is currently stored in the object storage of that processor. Each memory catalog also includes a document type partition 173 which stores the document type, for example "correspondence" or "CORR" as a first document type or "buckslips" as a second document type, for example. Each memory catalog also includes a data made partition 174 which stores the date upon which the master document image was scanned into the system by the scanner 110. The memory catalogs also include the archive period partition 175 which provides the period during which a master document image may reside in the system following the date made 174, before the master file is transferred to the archive storage 106. Each memory catalog also includes the archive date partition 176 which is the date upon which the master file is to be archived. The memory catalogs also include the retention period partition 177 which stores the period during which the file may reside in the object storage of the processor, starting from the day it was initially stored in the object storage. The memory catalogs are include the retention date partition which stores the date upon which the file is removed from the object storage of the processor. The partitions illustrated in Figs. 1D-1F and in Figs. 6A-6F are merely illustrative of the kinds of attributes which can be provided in the memory catalog for these classes of storage devices and processors. Not all of the memory catalogs for all of the processors in the network of Fig. 1A or Fig. 1B need be identical. Fewer or additional storage control attributes can be provided by the memory catalogs in each of these processors. An understanding of the operation and use of the memory catalogs can be had by referring to the example illustrated in Figs. 6A-6F which will be discussed below.

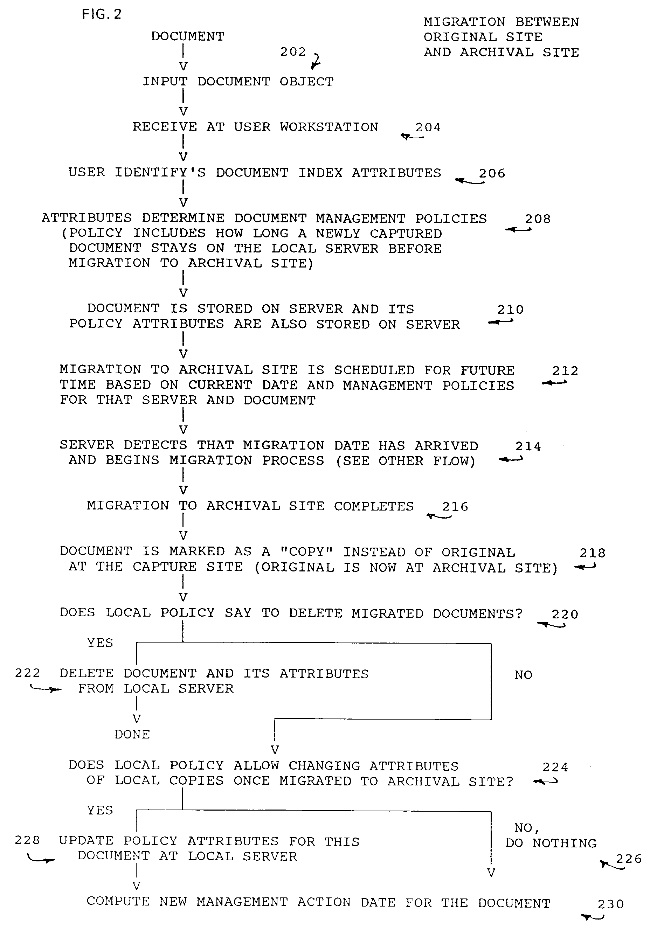

Fig. 2 illustrates a flow diagram of the sequence of operational steps for carrying out the process of migration of file control information between an original site and an archival site. The following are the steps shown in Fig. 2.

### Steps and Their Discussion for Fig. 2

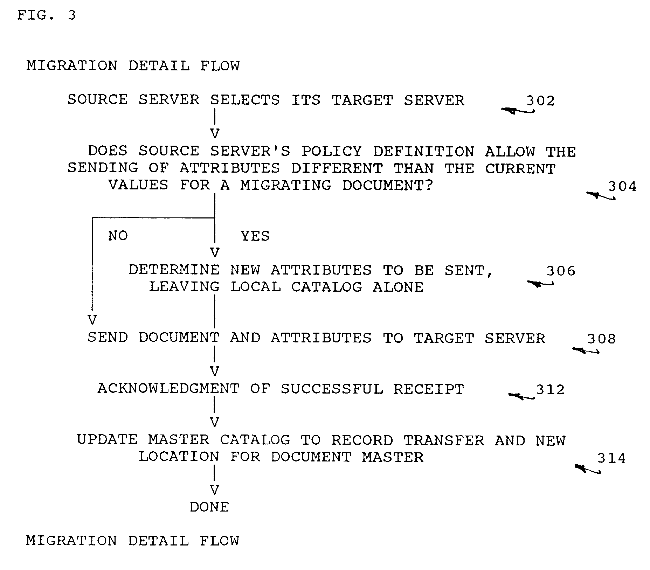

202. Original hard copy source document is submitted to the input device, such as scanned in by a document scanner 110 at workstation 108.
204. Document image is received from the input device 110 and stored temporarily on the hard disk drive at the workstation 108.
206. In some scenarios, a user may choose to review the new document at that time and assign attributes to the document, such as keywords, account number, or priority of action. This step may be augmented by intelligent document processing, as described in the copending patent application serial number 07/870,129 by T. S. Betts, et al. entitled "Data Processing System and Method for Sequentially Repairing Character Recognition Errors for Scanned Images of Document Forms," filed April 15, 1992, assigned to the IBM Corporation and incorporated herein by reference.
208. Either by explicit user action or by internal system processing, the document is assigned a set of management policies.
210. System software stores the document content on the target server 112 and enters storage control information about the document in the server's catalog.
212. System software examines the document information in the catalog and determines how many days should pass before the document is migrated to an archival site 106. Server's 112 catalog is set to indicate the date at which migration is scheduled.
214. On or after the date scheduled for this document, system software examines the server's 112 catalog for documents that require action. System software determines this document requires action - migration to an archive site 106.
216. See flow "Migration Detail" of Fig. 3, which completes.
218. Because the original document content is being moved to the archival site 106, the server 112 marks its remaining copy of the document as a "copy" distinguished from "master" or "original," by altering the storage control information in the server's 112 catalog.
220. Server 112 looks at the management policies for the document. One policy establishes what to do to documents that have been migrated to another server, e.g. archive 106. That is, delete or preserve the document on server 112.
222. If the policy indicates deletion, then the server 112 deletes its copy of the document from its storage space and catalog. Flow completes.
224. If the policy indicates no deletion (preserve copy), then the document is not deleted from server 112. Check other management policies for the document. A policy may allow the attributes of a document to be changed after it has been migrated, because a document copy may be managed differently than its master.
226. If the local policy for this type of document does not allow attributes to change after migration, leave attributes alone. Only the "copy" vs. "master" indication has changed. Go to step 230.
228. If the local policy for this type of document allows attributes to change, then system software or customized user code determines new attributes for the document.
230. Compute next management action for the document based on its attributes and the current date.

Fig. 3 is a flow diagram of a sequence of operational steps which provides a more detailed illustration of the migration of file control characters. The migration detail flow steps are as follows:

### Migration Detail Flow of Fig. 3

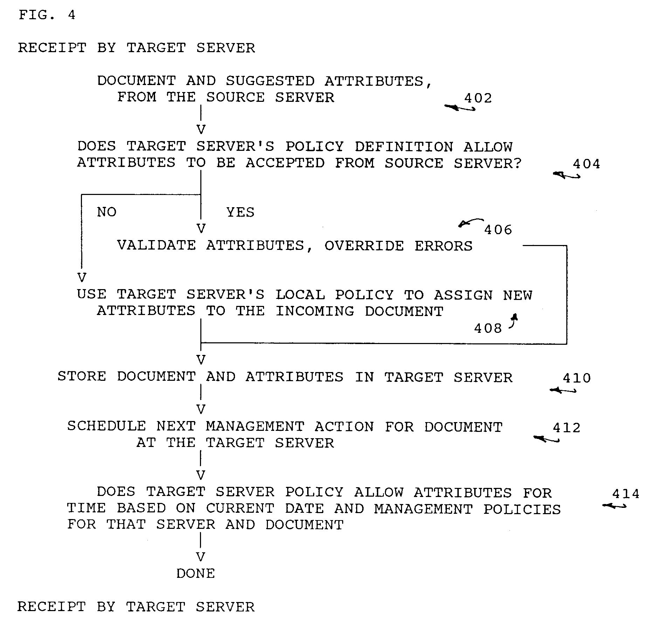

302. Local server policy identifies which server in the network is the target archival server 106 for this server's 112 captured documents.
304. If local server 112 policy does not allow a document to be given new policy attributes as it migrates, then skip to step 308.
306. System software or customized user code determines the attributes to be sent with the object to its new server 106. These attributes do not affect the attributes in the local server's 112 catalog.
308. Send document content and attributes to new server 106. The attributes sent are either the active attributes. Then, go to flow "Receipt by Target Server" in Fig. 4.
312. Target server 106 notifies source server 112 of successful receipt.
314. Source server 112 updates central catalog in IODM 100 for all servers to record that the document "master" is now on the target server.

Fig. 4 is a flow diagram of a sequence of operational steps which depicts the process for receipt of file control information by a target server. The following are the steps for the receipt by the target server.

### Receipt by Target Server for Fig. 4

402. Target server 106 receives document and the suggested attributes from the source server 112.
404. If target server's 106 local policy does not allow attributes to be sent from another server, skip to step 408.
406. Validate that attributes sent by source server 112 are acceptable. Override attributes that are not acceptable, using system software or customized user code. Skip to step 410.
408. Use target server's 106 local policy for migrated documents to assign policy attributes to the received document.
410. Store document in target server's 106 storage space and in its catalog.
412. Use document's policy attributes and their meaning at the target server 106 to schedule next action for the document at that server. The action might include migrating the document to a third server for more permanent archival, deleting it, or other storage management action. This action is independent of document management at the original source server 108 that captured the document. Step 414 determines if the target server 106 policy allows attributes for time, based on current date and management policies for that server and document.

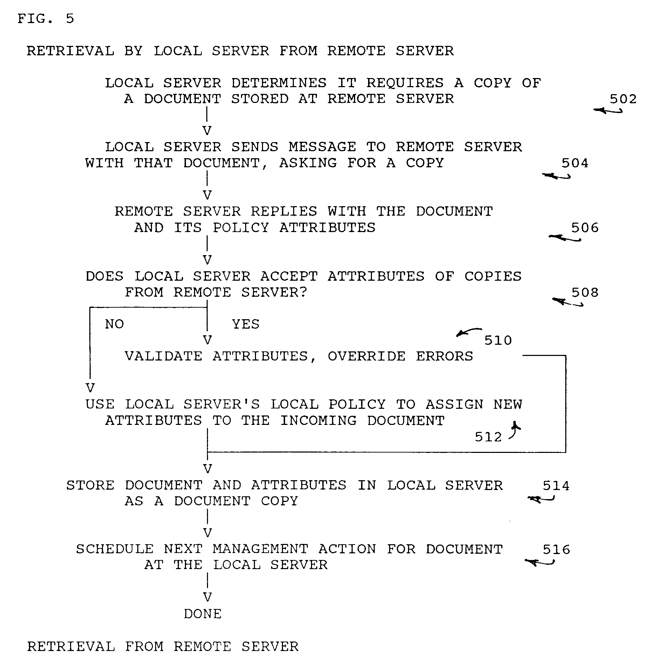

Fig. 5 is a flow diagram of a sequence of operational steps for performing the process of retrieval of file control information by a local server 114 from a remote server 106. The following steps describe the retrieval from a remote server.

### Retrieval From Remote Server for Fig. 5

502. Local server 114 determines it needs document that it does not have, and determines which remote server 106 has the document master, using the control index 104.
504. Local server 114 requests copy of the document from the server 106 with the master.
506. Owning server 106 sends document and relevant policy attributes to the requesting local server 114.
508. If local server's 114 policy does not allow acceptance of attributes sent from another server, skip to 512.
510. Validate that attributes sent by remote server 106 are acceptable. Override attributes that are not acceptable, using system software or customized user code. Skip to step 514.
512. Use local server's 114 policy for new copies of documents to assign policy attributes to the received document.
514. Store document and attributes in local server's 114 storage space and in its catalog.
516. Use document's policy attributes and their meaning at the target server 114 to schedule next action for the document at that server 114. The action may not include migrating the document to another server for more permanent archival, because this is not the master copy of the document, and only master copies may be migrated. This action is independent of document management at the owning remote server 106, and independent of whether this local server 114 was the same server that captured the original source document before migration.

### EXAMPLE 1

A letter arrives to a business from a customer asking for the addition of a new person to an insurance policy. The business employee who handles incoming mail scans (110) the letter into the storage system (108) and, based on the customer number from the letter, puts it into the customer's folder. Because the letter is a policy change letter, the employee assigns the letter to management category POLICY_LETTER.

You could consider POLICY_LETTER a "management class," which is one of the set of "control characters." Now, previously the system storage administrator had given the management class the following other characteristics for managing this type of data. These control values were previously stored in IODM 100, and are now downloaded to server 108.

"Migration period" - 0 days. Migrate this object to the archive at the first opportunity. The customer wishes to have a permanent archive made the same day as images arrive into the system.

Storage class" - store the image on DASD. Class transition period" - 7 days. Keep the local image on DASD for one week. This is to keep a local copy handy during the likely period of processing by the company and potential follow-up with customer.

"Retention period" - 7 days. Delete the object at this site after one week. Instead of a class transition to a slower medium, the object will be purged.

The flows of Figs. 2-5 show changing attributes during the migration to the archive site 106. Here is an example of what could happen. In this example, the local site (112) decides to change the attributes when it sends the image to the archive site (106). It says the image's management class should be "ARCHIVED" which the system storage administrator previously defined in IODM 100. These values for "ARCHIVED" management class are now downloaded to server 106. It could have characteristics (at the target archive site 106):

"Migration period" - none. This class does not migrate anywhere because it is the final destination. "Storage class" - store the image on DASD.

"Class transition period" - 1 day. After one day, the image will be migrated to another storage class (optical) at this site. Note that this occurs independently of the seven-day period still running down at the original capture site. Retention period" - 7 years. For this company, this type of image must be retained for seven years.

### EXAMPLE 2

A particular example of system managed storage in accordance with the invention, is provided in Figs. 6A-6F. The pseudo code represented in Tables 1-4 should also be referred to in discussing the example of Figs. 6A-6F. The example refers to the system of Figs. 1A or 1B and provides for the input of a hard copy Jones document into the input workstation 108. This is followed by the transfer of the master copy to the user workstation 112 and the retention of a derivative copy in the input workstation 108. This is followed by the transfer of the master copy to the archive server 106 and the retention of a derivative copy in the user workstation 112 and further, the expiration of the retention period for the copy in the input workstation 108. This is followed by the transfer of a derivative copy of the file to the user workstation 114. This sequence is illustrates in Figs. 6A-6D.

In Fig. 6A, the scanner 110 scans in the hard copy Jones document and the image file for that document is transferred to the input object storage 148 of the input workstation 108 where it is stored as a master copy. Substantially simultaneously, the document type input is provided either by the keyboard 144 for the input workstation 108, or alternately the document type is derived from character recognition on the scanned image from the scanner 110. The document type information is then transferred from the input processor 108 to the IODM processor 100. The IODM processor 100 will then use the document type input, which in this case is "correspondence" and the storage class for the input workstation 108, which is "input workstation," to select a retention period and an archive master period. Since it is a master copy which is to be stored in the input object storage 148, it will be the retention period for a master copy at an input workstation for a document type which is "correspondence" which is accessed from the management class table 121. Also, the archive master period will be selected for the input workstation storage class. The value of the retention period of five days and of the archive period three days is then output from the IODM processor 100 to the input workstation 108, where it is stored in the input memory catalog 141.

The following values are stored in the input memory catalog 141 at this time. First the update value of 3 March 1993 is stored. The storage class 170 is "input." The file name 171 is "Jones." The master/copy 172 is "master." The document type 173 is "CORR." The date made 174 is today's date of 3 March 1993. The archive period 175 is the value transferred from the IODM processor or three days. The archive date 176 is computed by adding the archive period 175 to the date made 174, which becomes 6 March 1993. The retention period 177 is the value transferred from the IODM processor 100 or five days. A retention date 178 is computed from the archive date 176 plus the retention period 177, which becomes 8 March 1993. These control attributes stored in the input memory catalog 141 of the input workstation 108, will provide the system-wide storage management policy for the storage of the Jones master file in the object storage 148. If the user has specified that the local policy override 181 in the input workstation processor 108 would be effective, then the local storage policy attribute values 180 would have been substituted for the corresponding values in the input memory catalog 141.

For the example shown in Figs 6A-6F, the local policy override partitions will all be set to "no" so that the system-wide storage policy will be implemented. Reference should be made to the pseudo code of Tables 1 and 2 for a detailed understanding of the sequence of steps carried out in storing the master file of the Jones document in the input object storage 148 and in entering the storage control attributes into the input memory catalog 141.

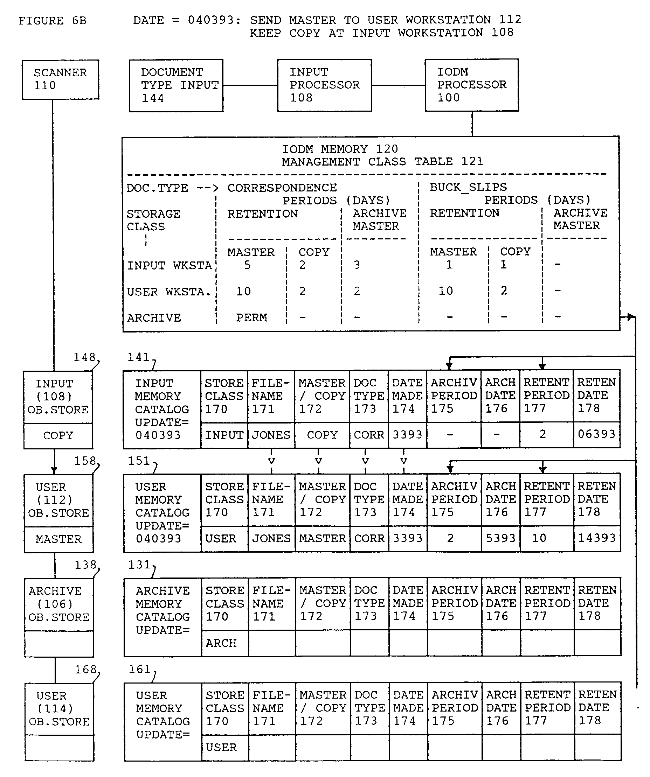

Fig. 6B illustrates the operation on the following day for March 1993 sending the master file from the input workstation 108 to the user workstation 112 and of keeping a copy of the file at the input workstation 108. As is shown in Fig. 6B, the storage class 170 for the user memory catalog 151 is "user." The file name 171 of "Jones" is transferred from the input workstation 108. The master/copy 172 is "master," the document type 173 is "CORR," the data made 174 is still the original scanning date of 3 March 1993. The archive period 175 is received from the management class table 121 of the IODM processor 100 and is a value of two days. The archive date 176 is computed by adding the archive period of two days to the date made 174, which becomes the archive date 176 of 5 March 1993. The retention period 177 is received from the management class table 121 of the IODM processor 100 and is a value of 10 days. This value is added to the update value of 4 March 1993, which is the date that the entry is made to the user memory catalog 151. Thus the retention date 178 is the retention period 177 of 10 days added to the update of 4 March 1993, or 14 March 1993. Reference should be made to the pseudo code of Tables 1, 2 and 3 to understand the detailed steps carried out in Fig. 6B.

Fig. 6C shows the action on 6 March 199, of archiving the master at the archive 106, keeping a copy at the user workstation 112 and deleting a copy at the input workstation 108 because it has expired. Reference should be made to Tables 1-4 for the pseudo code detailed representation of the steps for Fig. 6C.

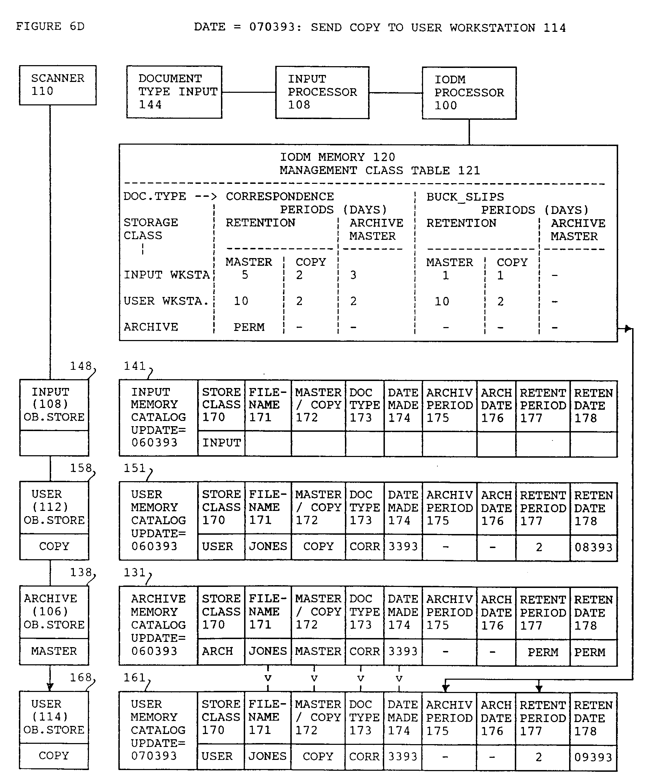

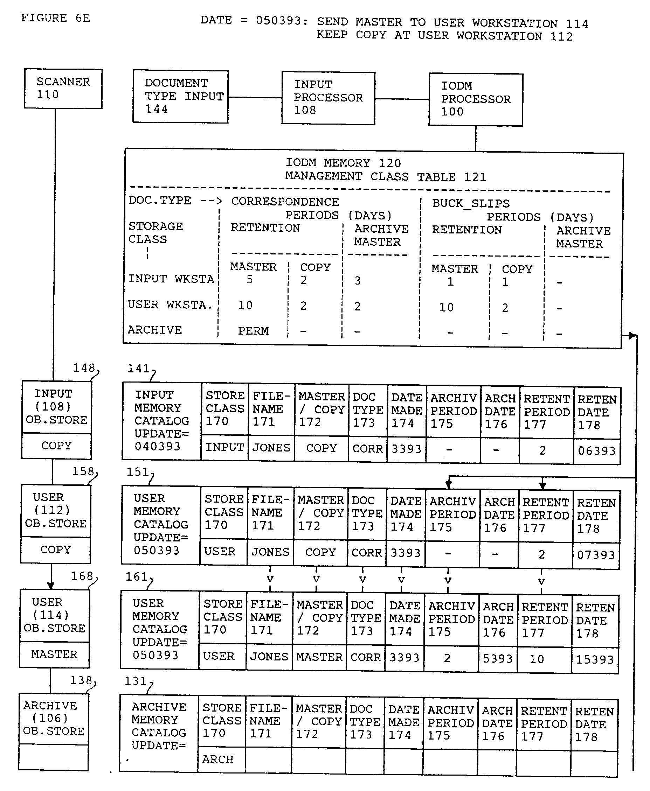

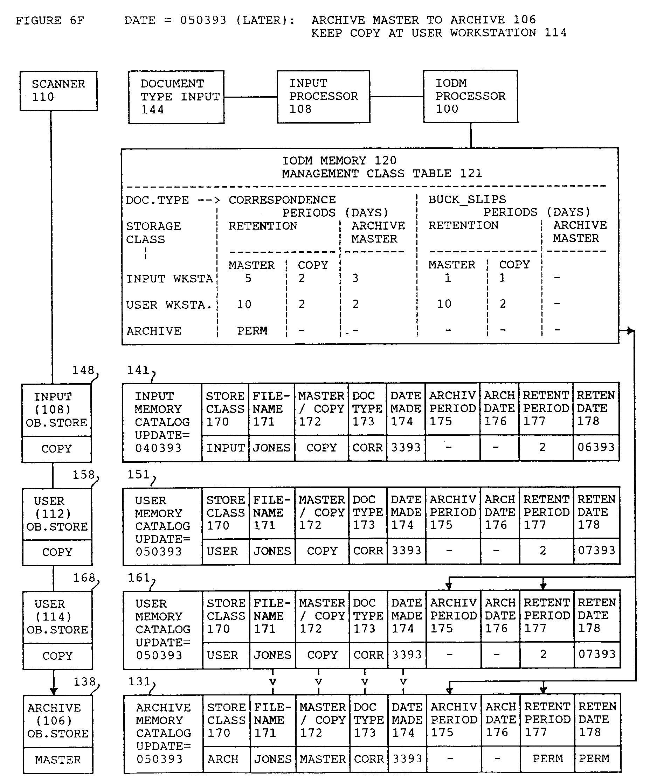

Fig. 6D shows the action on 7 March 1993 sending a copy to the user workstation 114. Reference should be made to the pseudo code in Tables 1-4 for a detailed description of the steps which accomplish Fig. 6D. Fig. 6E and Fig. 6F modify the example, taking the time back to 4 March 1993 in Fig. 6B. Following Fig. 6B, Fig. 6E then occurs on 5 March 1993, and sends the master to the user workstation 114 and keeps a copy at the user workstation 112. Reference should be made to the pseudo code of Tables 1-4 for detailed steps carried out in Fig. 6E.

Fig. 6F occurs at a later time on the same day of 5 March 1993, where the master is archived on the archive server 106 and a copy is kept at the user workstation 114 (see Tables 1-4 for details).

The transition of the example from Fig. 6B to Fig. 6C archives the master file at the archive 106 by transferring it from the user 112. A copy is to be kept at the workstation 112. Tables 1-4 illustrate the detailed steps for transferring from the management class table 121 in the IODM processor 100 the appropriate control attributes for system-wide storage policy to the user memory catalog 151 of the user workstation 112 and to the archive memory catalog 131 in the archive server 106. In particular, it can be seen that the archive period 175 and retention period 177 are transferred to the user memory catalog 151 from the management class table 121, and that the resulting archive date 176 and the retention date 178 are computed and written into the user memory catalog 151. Also it can be seen that the archive period 175 and the retention period 177 have been transferred to the archive memory catalog 131 for the archive server 106. From this, the archive date 176 and the retention date 178 are computed and written into the archive memory catalog 131. In this example, the local policy override for the user workstation 112 and the archive server 106 are set to "no" so that the system-wide policy established by the management class table 121 in the IODM processor 100, is applied at the user workstation 112 and the archive server 106.

In addition, it can be seen in Fig. 6C, that the retention date of 6 March 1993 for the copy of the file stored in the input workstation 108, as represented by the input memory catalog 141 of Fig. 6B, has expired on the date 6 March 1993, as represented in Fig. 6C. This results in the retention routine executed in the input workstation 108, deleting the copy of the file stored in the input object server 148 and deleting the entry for the Jones copy in the input memory catalog 141, as is shown in Fig. 6. This operation is set forth in greater detail in Table 2.

Thus it can be seen that the system-wide storage policy established by the system administrator and embodied in the management class table 121 in the IODM memory 120 of the IODM processor 100, is carried out in various servers and storage devices in the network.

Fig. 6D illustrates the transition in the example from Fig. 6C, for the following day of 7 March 1993, where a copy of the file stored in the archive server 106, is transferred to the workstation 114. Fig. 6D shows that the appropriate storage control attributes are output from the management class table 121 in the IODM processor 100 to the user memory catalog 161 in the user workstation 114, in association with the transfer from the archive server 106 of a copy of the Jones file to the object storage 168 in the user workstation 114. In particular, the archive period 175 and the retention period 177 are transferred from the management class table 121 to the user memory catalog 161 as shown in Fig. 6D. Then, the archive date 176 is computed and the retention date 178 is computed and those values are stored in the user memory catalog 161 of Fig. 6D. These steps are provided in the pseudo code of Table 3.

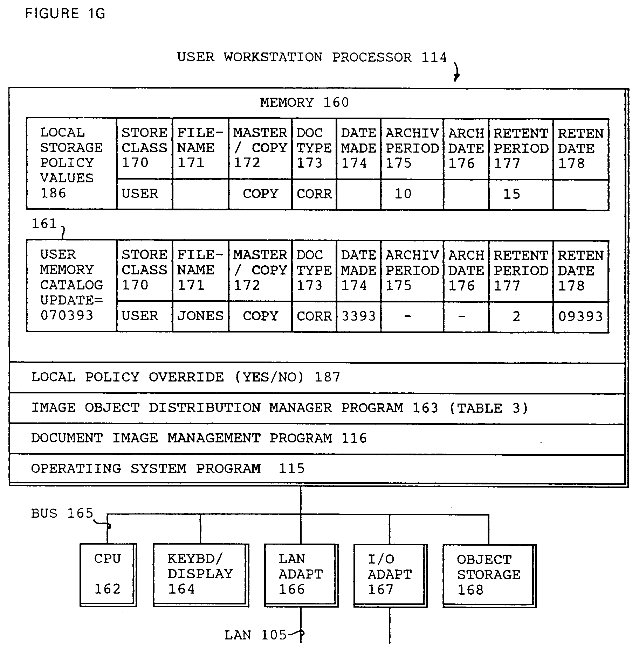

It can be seen that a retention date has been computed of 9 March 1993 for the copy stored at the user workstation 114. This carries out the system-wide storage policy established by the system administrator and embodied in the management class table 121. Reference can be made to Fig. 1G illustrating the user workstation processor 114, to see the effect of a local policy override. If the local policy override 187 indicates "yes," then the local storage policy values 186 will be substituted for system-wide policy values which have been stored in the user memory catalog 161 for the user workstation processor 114. In the case of a local policy override, the retention period 177 of 15 days, as provided in the local storage policy values 186 of Fig. 1G, will be substituted for the system-wide specified retention period 177 of two days which was provided by the IODM processor 100. This would result in a computed retention date 178 of the addition of 15 days to the 7 March 1993 update value, which would result in a 22 March 1993 retention date 178 being the effective retention date for the copy of the Jones file stored at the user workstation 114 on 7 March 1993. In this manner, a system-wide storage management policy can be given effect, and yet local user selection of alternate storage policies can be effectively substituted.

Regarding the transition from Fig. 6B on 4 March 1993 to Fig. 6C on 6 March 1993, it is noted that the archive date 176 in the user memory catalog 151 of Fig. 6B specifies 5 March 1993. However, as is observed in Fig. 6C, the date of archiving is 6 March 1993. An example of this circumstance would be if the date 5 March 1993 fell on a holiday so that the user workstation 112 was not turned on on that day. As can be seen in the pseudo code of Table 3, when the user workstation is turned on, an initial inquiry is made as to whether there are any archive dates which are the same day or older than the current day. Thus, the master file stored in the user object storage 158 is archived on the day 6 March 1993 following the specified archive date 176 of 5 March 1993 for the user memorycatalog 151 of Fig. 6B.

To illustrate the feature of transferring a file between the same class of storage devices, Figs. 6E and 6F are provided for the example. Fig. 6E starts from Fig. 6B whose date is 4 March 1993, and on the following day 5 March 1993, Fig. 6E provides for the transfer of the master copy of the Jones file from the user workstation 112 to the user workstation 114. (This transfer before archiving would be possible in the example, if the user workstation 112 sent the file to workstation 114 after midnight, so that the date becomes 050393, but the device has remained on. Thus step 802 of Table 3 is not satisfied.) This example in Fig. 6E is a transfer of a file without changing its master/copy status and without changing its storage class status which remains "user." Since the document type 173 also does not change, no change in the storage control attributes are necessary in order to maintain the effect of the system-wide policy established in the management class table 121 of the IODM processor 100. Therefore, as can be seen in Fig. 6E, in the transfer of the master file from the user object store 158 in user workstation 112 to the user object store 168 in the user workstation 114, the contents of the user memory catalog 151 at the user workstation 112 is transferred to the user memory catalog 161 in the user workstation 114. At the user workstation 114, the extra copy which is received has the retention period 177 used to re-compute the retention date 178, by adding the retention period of 10 days to the user memory catalog update of 5 March 1993, resulting in a new computed retention date 178 of 15 March 1993, which is written into the user memory catalog 161. In this manner, the storage control attributes provided for the storage of the master file in the user workstation 112, are transferred to the user workstation 114, and those attributes which must be re-computed such as the retention date 178, are re-computed and stored at the new location. In this manner, the system-wide storage management policy is given effect.

The transition from Fig. 6E to Fig. 6F occurs later on the same day of 5 March 1993, where the pseudo code of Table 3 determines that the master file stored in the user workstation 114 is ready to be archived in the archive server 106. The transfer of the master file from the user workstation 114 to the archive server 106 and the keeping of a copy of that file at the user workstation 114 is accompanied by the transfer of the appropriate storage control attributes from the management class table 121 in the IODM processor 100 to the user memory catalog 161 and the archive memory catalog 131, as shown in Fig. 6F. In particular, the archive period 175 and the retention period 177 are transferred into the user memory catalog 161 and the corresponding archive date 176 and the retention 178 are re-computed into the user memory catalog 161. The file name 171, master copy status 172, document type 173 and date made 174 are transferred directly from the user memory catalog 161 to the archive memory catalog 131. The archive period 175 and the retention period 177 are transferred to the archive memory catalog 131 from the management class table 121 of the IODM processor 100. The archive date 176 and the retention date 178 are then re-computed and stored in the archive memory catalog 131. In this manner, the system-wide storage management policy embodiment in the IODM processor 100, is given effect in the user workstation 114 and the archive server 106.

The invention can be applied to image management systems and to management of arbitrary machine-readable object types, since any object type is a potential candidate for storage management policies.

The resulting invention enables an originating storage location to establish the criteria for storage management for file throughout a complex, distributed storage data processing system.

Although a specific embodiment of the invention has been disclosed, it will be understood by those having skill in the art that changes can be made to that specific embodiment without departing from the spirit and the scope of the invention.

## Claims

1. In a data processing system having a plurality of storage devices, including an originating storage device and an archiving storage device, a method for parallel system managed storage for objects, comprising the steps of:
receiving an object file at an originating storage location;
assembling control information to control the storage of said file in a storage device;
transmitting a copy of said file and said control information to a second storage device in said data processing system;
performing said control functions at said second storage device in response to said control information.

2. The method of claim 1 which further comprises:
said control information controlling a duration of storage for said object file.

3. The method of claim 2 which further comprises:
deleting said object file at said originating storage location;
reading said control information at said second storage location associated with said copy of said file;
deleting said copy of said file at said second storage location, in response to said control information.

4. The method of claim 1, which further comprises:
selectively performing alternate local option control functions at said second storage device.

5. The method of claim 1, wherein said control information controls the migration of said object file to a third storage device in said system.

6. The method of claim 1, wherein said control information controls the migration of said object file to a third storage device in said system after a duration from said receiving at said originating location.

7. In a data processing system having a plurality of storage devices, including an originating storage device and an archiving storage device, a subsystem for parallel system managed storage for objects, comprising:
receiving means for receiving an object file at an originating storage location;
assembling means coupled to said receiving means, for assembling control characters to control the storage of said file in a storage device;
transmitting means coupled to said assembling means, for transmitting over a communication link a copy of said file and said control characters to a second storage device in said data processing system;
control means coupled to said communication link, for performing said control functions at said second storage device in response to said control characters.

8. The subsystem of claim 7 which further comprises:
said control characters controlling a duration of storage for said object file.

9. The subsystem of claim 8 which further comprises:
first deleting means coupled to said receiving means, for deleting said object file at said originating storage location;
reading means coupled to said control means, for reading said control characters at said second storage location associated with said copy of said file;
second deleting means coupled to said reading means, for deleting said copy of said file at said second storage location, in response to said control information.

10. The subsystem of claim 7, wherein said object file is an image object file.

11. The subsystem of claim 7, wherein said control information controls the migration of said object file to a third storage device in said system.

12. The subsystem of claim 7, wherein said control information controls the migration of said object file to a third storage device in said system after a duration.
